Europäisches Patentamt

European Patent Office

Office européen des brevets

(19)

(11) Veröffentlichungsnummer: **0 015 407**
**B1**

(12) ## EUROPÄISCHE PATENTSCHRIFT

(45) Veröffentlichungstag der Patentschrift:
**16.05.84**

(51) Int. Cl.³: **G 01 K 17/06**

(21) Anmeldenummer: **80100679.2**

(22) Anmeldetag: **11.02.80**

(54) **Vorrichtung zur elektrischen Verbrauchsermittlung einzelner Wärmeverbraucher.**

(30) Priorität: **29.03.79 DE 2912522**

(43) Veröffentlichungstag der Anmeldung:
**17.09.80 Patentblatt 80/19**

(45) Bekanntmachung des Hinweises auf die Patenterteilung:
**16.05.84 Patentblatt 84/20**

(84) Benannte Vertragsstaaten:
**AT BE CH FR GB IT LU NL SE**

(56) Entgegenhaltungen:
**BE - A - 828 217**
**BE - A - 869 344**
**DE - A - 2 320 359**
**DE - A - 2 722 485**
**DE - B - 1 129 316**

(73) Patentinhaber: **Schultz, Johannes,**
**Friedrich-Koenig-Strasse 3-5, D-6800 Mannheim 1 (DE)**
Patentinhaber: **Völker, Karl,**
**Friedrich-Koenig-Strasse 3-5, D-6800 Mannheim 1 (DE)**

(72) Erfinder: **Schultz, Johannes,**
**Friedrich-Koenig-Strasse 3-5, D-6800 Mannheim 1 (DE)**
Erfinder: **Völker, Karl, Friedrich-Koenig-Strasse 3-5,**
**D-6800 Mannheim 1 (DE)**

(74) Vertreter: **Ratzel, Gerhard, Dr., Seckenheimer**
**Strasse 36a, D-6800 Mannheim 1 (DE)**

BUNDESDRUCKEREI BERLIN

## Vorrichtung zur elektrischen Verbrauchsermittlung einzelner Wärmeverbraucher

Die Erfindung betrifft eine Vorrichtung zur elektrischen Verbrauchsermittlung einzelner Wärmeverbraucher bestehend aus einem Gehäuse, in dessen dem Wärmeverbraucher zuzuwendenden Gehäuseunterteil eine Temperaturmeßeinrichtung angeordnet ist, deren Leitung zu einer im Gehäuse angeordneten Zähleinrichtung, gegebenenfalls mit von außen ablesbarer Anzeige und einer Batterieversorgung, führt.

Aus der DE-B-1 129 360 ist bekannt, den Wärmeverbrauch eines Heizkörpers unter Zugrundelegung einer sogenannten »Strahlungsgleichung« für den Heizkörper zu bestimmen. Man geht dabei von folgender theoretischer Gleichung aus:

$$Q = \alpha \cdot A \left( \vartheta_0 - \vartheta_R \right)$$

dabei bedeutet:

$Q$ = abgegebene Wärme,

$\alpha$ = Wärmeübergangskoeffizient zwischen Abgabeoberfläche, z. B. Heizkörperoberfläche und Raumluft,

$A$ = äußere Oberfläche des Abgabekörpers, z. B. Heizkörpers,

$\vartheta_0$ = Oberflächentemperatur des Abgabekörpers, z. B. Heizkörpers,

$\vartheta_R$ = Raumtemperatur (oder Ersatzgröße).

Das Produkt $\alpha \cdot A$ kann für einen Heizkörper in etwa als konstant betrachtet werden, so daß die Wärmeabgabe bei einem Heizkörper eine Funktion der Heizkörper-Oberflächentemperatur und der Raumtemperatur ist. Hiernach ist die Wärmeabgabe $Q$ eines Heizkörpers von der mittleren Temperatur seiner Oberfläche abhängig, die ihrerseits wieder von derjenigen des Wärmeträgers im Heizkörper abhängt. Nicht jedoch hängt nach dieser Gleichung die Wärmeabgabe $Q$ von der Menge des strömenden Wärmeträgers ab. Die Oberfläche $A$ und die spezielle Ausführung $\alpha$ des Heizkörpers (z. B. Material werden durch die beiden genannten Konstanten berücksichtigt. Die $\alpha$-Werte sind DIN-mäßig für die verschiedenen Typen tabellarisch festgelegt. Die Raumtemperatur $\vartheta_R$ der Umgebungsluft wird vielfach zwecks weiterer Vereinfachung ebenfalls als nahezu konstant angenommen, da z. B. jeder Mieter die Raumtemperatur auf etwa 20° C einregulieren wird.

Aus der BE-A-828 217 ist eine Vorrichtung der eingangs genannten Gattung bekannt. Allerdings ist dort die Temperaturmeßeinrichtung nur als Schalter ausgebildet, der bei einer erhöhten Temperatur den elektrischen Kreis für die Zähleinrichtung schließt. Wird der Wärmeverbraucher eingeschaltet, so erwärmt er den Meßfühler, der dann also die Zähleinrichtung einschaltet, bis der Wärmeverbraucher wieder abgeschaltet wird. Dann kühlt der Wärmeverbraucher ab, also auch der Meßfühler, der dann den elektrischen Kreis wieder unterbricht. Damit ist es aber nicht möglich, unterschiedliche Temperaturen des Wärmeverbrauchers entsprechend der eingangs genannten Gleichung bewertend zu ermitteln. Dies führt zu groben Ungenauigkeiten bei der Verbrauchsermittlung insgesamt. Demgegenüber soll nach der vorliegenden Erfindung eine Vorrichtung dieser Art geschaffen werden, die die unterschiedlichen Temperaturen des Wärmeverbrauchers möglichst richtig bewertet, so daß eine genaue Verbrauchsermittlung resultiert.

Die aus der DE-A-2 320 359 bekannte Vorrichtung macht hingegen vom Prinzip des Thermogenerators Gebrauch. Dabei wird der Temperaturunterschied zwischen dem Heizkörper und seiner Umgebung zur Erzeugung elektrischer Energie eingesetzt, die ihrerseits wiederum den Elektromotor eines mechanischen Zählwerkes antreibt. Diese Vorrichtung macht aber im Vergleich zu ihren eigenen Abmessungen große Kühlrippen erforderlich. So ist sie auch nicht an den Heizkörper selbst anzubringen, sondern an den Zuleitungen zum Heizkörper, wo gewöhnlich genug freier Raum gerade für diese Kühlrippen zur Verfügung steht. Auch können bei dieser Vorrichtung die Heizkörper spezifischen Daten nicht eingestellt werden. Schließlich bedarf diese Vorrichtung, wie schon gesagt, zwingend einer Temperaturdifferenz mit den damit verbundenen, bekannten Nachteilen, wie z. B. der Fälschungsmöglichkeit dadurch, daß die Kühlrippen mit aufgewärmt werden, so daß die Temperaturdifferenz verschwindet und daher kein Wärmeverbrauch registriert werden kann.

Des weiteren sind elektrische Heizkostenverteilungssysteme z. B. aus der BE-A-869 344 und der DE-A-2 722 485 bekanntgeworden, deren Meßsignal in einer elektronischen Schaltung pro Abnehmer bewertet und/oder über eine elektrische Leitung an eine Zentralstelle weiter gegeben werden. Diese bisher bekannten elektrischen Heizkostenverteilungen besitzen jedoch den Nachteil, daß die für ein derartiges System zur Verfügung stehenden Kosten weit überschritten werden.

Erfindungsgemäß wird nunmehr eine elektronische Auswertschaltung, die das von der Temperaturmeßeinrichtung gelieferte Signal als eine Funktion der Temperatur der Oberfläche des Wärmeverbrauchers darstellt, als Zähleinrichtung vorgeschlagen, wobei die elektronische Auswertschaltung zur integralen Verarbeitung des Meßsignals in eine bleibende Verbrauchsanzeige ausgebildet ist; ferner wird vorgeschlagen, daß die Temperaturmeßeinrichtung als Thermistor bzw. Widerstandsthermometer ausgebildet ist, daß der elektronischen Auswertschaltung eine Einrichtung zugeordnet ist, mit welcher die spezifischen Daten des Wärmeverbrauchers einstellbar sind, daß an dem vom Wärmeverbraucher abzuwendenden Gehäuseoberteils vorzugsweise ein Meßfühler zur Messung der Raumtemperatur angeordnet ist, dessen elektrisches Signal zur Differenzbildung mit dem elektrischen Signal der Temperaturmeßeinrichtung dient, und daß das Gehäuse Belüftungslöcher bzw. Durchgangslöcher zur Luftzirkulation aufweist.

Entsprechend den Produktenskalen bei den Verdunstungsgeräten besitzt also die erfindungsgemäße Vorrichtung eine einstellbare Einrichtung, mit welcher die Heizkörper spezifischen Daten, wie Wärmeleistung, Heizkörpertyp, Montageart usw. für jeden Heizkörper eingestellt werden können. Dabei wird das von dieser Einrichtung herrührende elektrische Signal ebenfalls der Auswertschaltung aufgegeben. Durch die nunmehr kompakte Bauweise können die Erfahrungen mit den bewährten Verdunstungsmessern und die in den RAL-Bestimmungen vorgeschriebenen Montage- und Auswertkriterien benutzt werden.

Eine solche Vorrichtung kann auch in eine Vorrichtung zur elektrischen Verbrauchsermittlung der Warmwasserkosten an einzelnen oder mehreren Zapfstellen einzelner Verbraucher fortgebildet werden.

Die Verbrauchsermittlung bei der Erfassung der Warmwasserkosten geht dabei von folgender theoretischen Gleichung aus:

$$Q = m \cdot c \cdot (\vartheta_w - \vartheta_k)$$

dabei bedeutet:

$Q$      die im Wasser enthaltene Wärmemenge,
$m$ = Durchfluß des Warmwassers,
$c$ = Wärmekapazität des Warmwassers,
$\vartheta_w$ = Warmwassertemperatur,
$\vartheta_k$ = Kaltwassertemperatur.

In dieser Gleichung kann $\vartheta_k$ und $c$ als konstant angenommen werden, so daß für die Verbrauchserfassung lediglich die Durchflußmenge und die Warmwassertemperatur erforderlich ist.

Aus der DE-B-1 129 316 ist ein Warmwasserzähler bekannt, der jedoch eine rotierende Einrichtung zur Erfassung der Durchflußmenge zwingend erfordert. Die Berücksichtigung Heizkörper spezifischer Daten ist nicht möglich, zumal die Auswertung der vom Durchfluß abgeleiteten Drehbewegung nicht elektronisch erfolgt. Die Temperatur des Wärmeträgers wird nur unmittelbar von einem Öl erfaßt, dessen Zähigkeit temperaturabhängig ist.

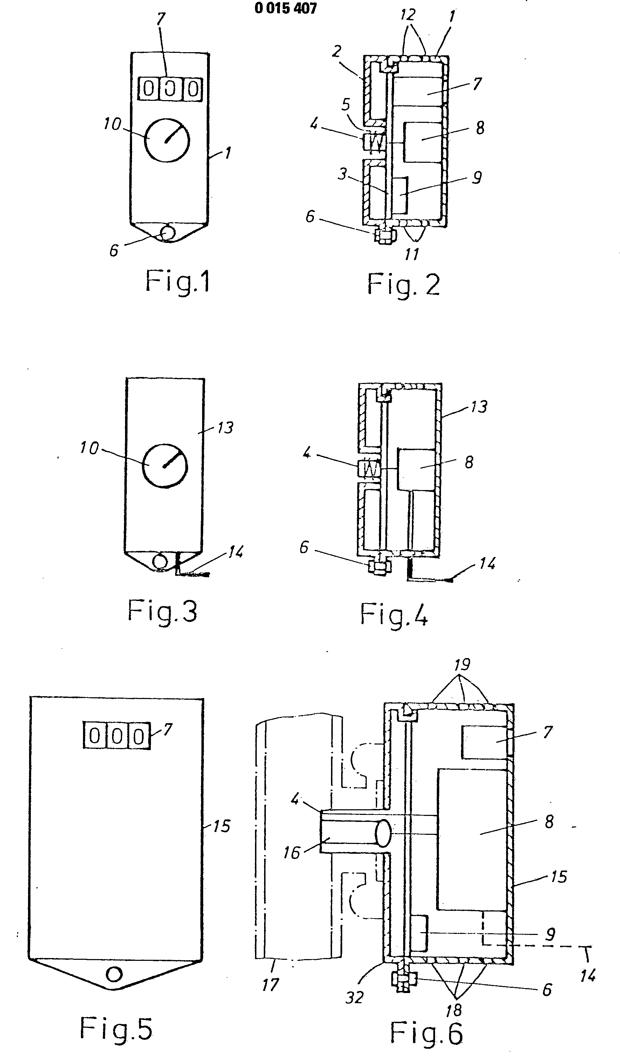

Aus der DE-A-2 722 485 ist zwar ein System zur elektronischen Ermittlung der Warmwasserkosten bekannt; dort sind für das Warmwasser ein Durchflußmengenmesser, ein Temperaturfühler und eine Steuerschaltung vorhanden. Diese Systemelemente sind jeweils voneinander räumlich getrennt und eigenständig, wie das z. B. aus der dortigen Fig. 1 zu ersehen ist. Dies bedeutet eine aufwendige Montage. Um eine zuverlässige Temperaturmessung des Warmwassers zu gewährleisten, müßte eine Rohrunterbrechung in der Warmwasserleitung zum Einbringen des Temperaturfühlers eingerichtet werden zusätzlich zu einer weiteren Rohrunterbrechung für den Durchflußmengenmesser. Demgegenüber soll nach der Erfindung eine kompakte Vorrichtung zur elektrischen Verbrauchsermittlung des Warmwassers geschaffen werden; dadurch sollen die Montagearbeiten wesentlich erleichtert und verbilligt werden.

Gemäß einer Weiterbildung der Erfindung ist dazu innerhalb des Gehäuses neben der Temperaturmeßeinrichtung zusätzlich ein Mengenerfasser angeordnet, wobei die Temperaturmeßeinrichtung an dem Gehäuseunterteil so angeordnet ist, daß sie direkt die Temperatur des Warmwassers erfaßt, wobei die Mengenerfassung durch Umsetzung des Differenzdruckes nach dem Venturiprinzip erfolgt und durch entsprechende Ausbildung der Venturikanäle über die Vergleichstemperatur im Venturikanal auf die Durchflußmenge geschlossen wird.

Somit ist der Mengenfühler so aufgebaut, daß er in handelsübliche Anschlußstücke (Fittings) oder in Spezialanschlußstücke in einfacher Weise eingebaut bzw. einschraubbar ist.

Darüber hinaus sollte die erfindungsgemäße Vorrichtung gerade im Hinblick auf ihre kompakte Bauweise gewährleisten, daß die Temperaturmeßeinrichtung immer in gutem mechanischen Kontakt zur Oberfläche des Wärmeverbrauchers steht. Insbesondere separate Verbindungseinrichtungen, wie z. B. eine Rohrschelle, zur Wärmeverbindung der Temperaturmeßeinrichtung mit dem Wärmeverbraucher sollten vermieden werden; denn sonst wäre die kompakte Bauweise nicht gewährleistet und die Installation verumständlicht und verteuert. Schon in der BE-A-828 217 ist vorgeschlagen, den Temperaturmeßfühler auf einer Druckfeder zum Anpressen an den Wärmeverbraucher anzuordnen. Der Nachteil dieses Vorschlages dient darin, daß der Temperaturmeßfühler dem Anpreßdruck seitlich ausweichen kann; dadurch kann er mit Seitenteilen des Gehäuses in Berührung kommen, woraus eine verfälschte Temperaturmessung resultieren kann.

Statt dessen wird hier zur Überwindung dieses Problems vorgeschlagen, die Temperaturmeßeinrichtung auf dem endseitigen, dem Wärmeverbraucher zuzuwendenden Flansch eine röhrchenförmige Halterung anzuordnen, die von einer Druckfeder umgeben ist, deren eines Ende sich auf den Flansch abstützt und deren anderes Ende sich gegen den Deckel eines die Druckfeder führenden Zylinders abstützt, der auf den Boden des Gehäuses fest angeordnet ist. Durch den Zylinder, in dem die Druckfeder geführt wird, wird ein seitliches Ausweichen der Temperaturmeßeinrichtung wirksam verhindert. Die Druckfeder kann auch nicht innerhalb des Zylinders ausweichen, da sie von innen durch die röhrchenförmige Halterung geführt wird. Daher bleibt der Flansch, auf dem die Temperaturmeßeinrichtung sitzt, stets von den übrigen Gehäuseteilen getrennt. Die Strecke der Druckfeder selbst ist zu lang, als daß sie eine verfälschende Wärmeabfuhr aufnehmen könnte. Durch die seitliche Stabilisierung der Druckfeder ist ferner immer ein konstanter Anpreßdruck am Heizkörper gewährleistet.

Die Erfindung ist mit weiteren Vorteilen anhand mehrerer in der Zeichnung dargestellter Beispiele anschließend näher erläutert. Dabei zeigt

Fig. 1 eine Draufsicht auf eine erfindungsgemäße Vorrichtung zur Heizkostenerfassung mit direkter Anzeige und einer Einstellung entsprechend den heizkörperspezifischen Daten,

Fig. 2 eine Ansicht der Vorrichtung gemäß Fig. 1 im Schnitt,

Fig. 3 eine Ansicht einer weiteren Vorrichtung zum Einsatz für Fernanzeige,

Fig. 4 die Vorrichtung gemäß Fig. 3 im Schnitt,

Fig. 5 eine Ansicht einer Vorrichtung für Warmwassererfassung mit direkter Anzeige,

Fig. 6 die Vorrichtung gemäß Fig. 5 im Schnitt, gegebenenfalls auch für Fernanzeige,

Fig. 7 eine Ansicht der Vorrichtung gemäß Fig. 1 bis 4,

Fig. 8 eine erfindungsgemäße Vorrichtung mit zwei Meßfühlern zur Differenzbildung gemäß den Fig. 1 bis 4.

In den Figuren sind jeweils gleiche Teile mit gleichen Bezugsziffern gekennzeichnet.

Die Vorrichtung gemäß den Fig. 1 bis 4, 7 und 8 besteht aus einem Gehäuse, gebildet aus einem Deckel als Gehäuseoberteil 1 und einem Gehäuseunterteil 2, die durch eine Trennwand 3 voneinander getrennt sind. Im Gehäuseunterteil 2 ist zentral, vorzugsweise in einer Aussparung des Bodens, eine Temperaturmeßeinrichtung, und zwar ein Temperaturfühler 4 angeordnet, der mittels einer Feder 5 federbelastet ist, so daß der Temperaturfühler 4 mit konstantem Druck auf dem Heizkörper liegt. Die beiden Gehäuseteile 1 und 2 sind mittels einer Plombe 6 verplombt, so daß ein unbefugtes Öffnen des Gehäuses nicht möglich ist. Im Inneren des Gehäuseoberteils 1 befinden sich ein Zählwerk 7, eine elektronische Auswertschaltung 8 und eine Batterie 9 zur Versorgung des Gerätes. Mit der Bezugsziffer 10 ist eine Einstelleinrichtung für die heizkörperspezifischen Daten gekennzeichnet.

Die elektronische Auswertschaltung 8 innerhalb der erfindungsgemäßen Vorrichtung muß gewährleisten, daß die zu verarbeitenden elektrischen Signale eine Funktion der Temperatur der Heizkörperoberfläche darstellen. Dabei ist es notwendig, eine Unterdrückung aller Temperaturen unter etwa 30° C vorzusehen.

In den Fig. 3, 4, 7 und 8 ist eine Vorrichtung gezeigt, die eine Fernleitung 14 zur Fernanzeige des Verbrauchs aufweist. In diesem Fall kann trotzdem eine direkte Anzeige für den Wohnungsinhaber vorgesehen sein. Eine eigene Batterieversorgung kann entfallen, da die Versorgung der Vorrichtung über die Fernleitung 14 sichergestellt werden kann. Das Gehäuseoberteil 1, Fig. 2 weist Belüftungslöcher 11, 12 auf, um eine Zirkulation der Innenluft zu erzielen.

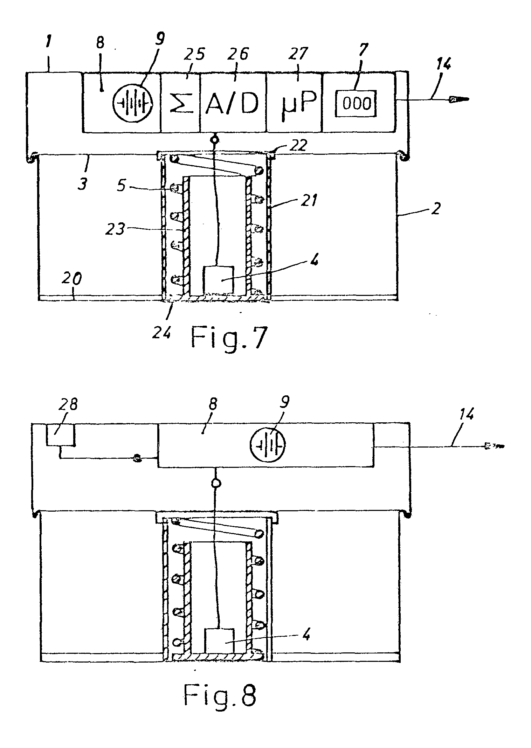

In den Fig. 7 und 8 sind Beispiele möglicher Ausgestaltungen der erfindungsgemäßen Vorrichtung gezeigt. Innerhalb des Gehäuses 1, 2 befindet sich ein Zylinder 21, der zentrisch in das Gehäuse eingepaßt und mit diesem fest verbunden ist. Dieser Zylinder 21 dient zur Führung der Druckfeder 5, wobei im Innenraum der Druckfeder 5 eine röhrchenförmige Halterung 23 eingesetzt ist. Diese Halterung 23 besitzt an ihrem unteren, heißen Ende einen Ringflansch 24, auf den sich die Druckfeder 5 mit ihrem unteren heißen Ende abstützt. Das andere Ende der Druckfeder 5 stützt sich entweder gegen einen Deckel 22 des Zylinders 21 oder einfach gegen das Gehäuseoberteil 1 ab. Im Inneren der röhrchenförmigen Halterung ist auf dem Boden derselben ein Meßfühler 4 angeordnet, der mit dem Boden der Halterung in innigem Kontakt steht. Im geschlossenen Zustand der Vorrichtung drückt die Druckfeder die röhrchenförmige Halterung 23 fest auf den Boden des Gehäuses auf, so daß immer ein konstanter Anpreßdruck am Heizkörper vorhanden ist. Die Ausgangsleitung des Meßfühlers führt in die Auswertschaltung 8, welche im Inneren des Gehäuses angeordnet ist.

In den Fig. 5 und 6 ist ein elektronischer Warmwasserkostenverteiler als Kompaktgerät dargestellt. Innerhalb eines Gehäuses 15, 32 befinden sich die direkte Anzeige 7, die elektronische Auswertschaltung 8, die Batterieversorgung 9 und ein Meßfühler 4. Des weiteren weist die Vorrichtung einen Sensor 16 zur Mengenerfassung auf. Das Gehäuseunterteil 32 ist geeignet zur Anbringung an einem Einbaustück 17 eines Warmwassersystems. Ebenfalls weist das Gehäuseoberteil 15 Durchgangslöcher 18, 19 zur Luftzirkulation auf.

Auch die in den Fig. 5 und 6 gezeigte Vorrichtung kann statt einer direkten Anzeige eine Fernanzeige 14 aufweisen.

Die elektronische Auswertschaltung 8 integriert das vom Meßfühler 4 gelieferte Signal und wertet es in eine bleibende Verbrauchsanzeige geeignet um. Die dazu notwendigen elektrischen oder elektronischen Einrichtungen sind hinreichend bekannt. Die elektronische Auswertschaltung 8 kann dabei batteriebetrieben sein, und somit kann jede erfindungsgemäße Vorrichtung eine Einzelanzeige aufweisen. Dieser Wert der Einzelanzeige kann am Ende einer Heizperiode entsprechend den von der Verdunstungsanzeige der Heizkostenverteiler her bekannten Methoden ausgewertet werden. Oder die elektronische Auswertschaltung 8 besitzt eine elektronische Einrichtung zur Speicherung der Meßwerte, welche ebenfalls am Ende der Heizperiode elektronisch abgerufen werden können. Oder die elektronische Auswertschaltung 8 ist über eine Leitung an eine zentrale Meßdatenerfassung angeschlossen, in der sämtliche Werte, getrennt jeweils nach Wohnungen, erfaßt werden. Dabei können die einzelnen elektronischen Auswertschaltungen 8 eines jeden Wärmeverbrauchers elektrisch hintereinander geschaltet werden, so daß für die Fernanzeige nur eine Leitung notwendig ist.

Die Vorrichtung gemäß Fig. 7 besitzt in ihrer Auswertschaltung 8 beispielsweise einen Summierer 25, einen Analog-Digitalwandler 26 und einen Mikroprozessor 27. Wenn die Vorrichtung als Kompaktgerät ausgestaltet ist, so besitzt diese eine eigene Batterieversorgung 9 und eine Direktanzeige 7.

Daneben kann auch die Vorrichtung gemäß Fig. 7 zur Fernanzeige ausgerüstet sein, wobei die Auswertschaltung hier eine Fernleitung 14 aufweist, die zu einem zentralen Anzeigegerät führt. In diesem Fall kann trotzdem eine direkte Anzeige innerhalb der Vorrichtung angeordnet sein. Das zentrale Anzeigegerät kann eine integrierte Anzeige für jede Wohnung besitzen.

Die erfindungsgemäße Vorrichtung kann mittels einer Klebefolie auf dem Heizkörper befestigt werden. Oder die Vorrichtung ist mittels eines Zweikomponenten-Klebers aufgeklebt. Des weiteren ist auch eine Befestigung mittels Schraubverbindung möglich.

Des weiteren soll die gesamte Gestaltung der erfindungsgemäßen Vorrichtung den bekannten Verdunstungsmessern entsprechen, so daß die erfindungsgemäße Vorrichtung einfach anstelle der Verdunstungsmesser montiert werden kann. Deswegen sollen das Gehäuse und die Form des erfindungsgemäßen elektrischen Heizkostenverteilers weitgehendst den Bestimmungen der RAL-Heizkostenverteilung angeglichen sein, um die dort niedergelegten Erfahrungen mit den Verdunstungsmessern verwerten zu können.

Fig. 8 zeigt eine Ausführungsform der erfindungsgemäßen Vorrichtung für einen Heizkörper mit einem weiteren Temperaturmeßfühler 28, der zur Differenzbildung mit dem heißen Meßfühler 4 herangezogen wird. Der Meßfühler 28 kann wahlweise auch außerhalb des Gerätes an geeigneter Stelle angebracht werden. Der zweite Meßfühler kann zur Vermeidung von größerer Beeinflussung auch mit den Steuergeräten für die Raumtemperatur, beispielsweise ferngesteuerten Thermostatventilen, gekoppelt sein. Der zweite Meßfühler kann in einem mechanischen Fernfühler oder in einem Steuergerät für die Thermostatventile eingebaut sein.

Des weiteren können die beschriebenen Vorrichtungen zur Ermittlung von Heizkosten und Warmwasserkosten kombiniert sein.

Zeichenerklärung

| 1 | Gehäuseoberteil |
| 2 | Gehäuseunterteil |
| 3 | Trennwand |
| 4 | Temperaturmeßeinrichtung |
| 5 | Druckfeder |
| 6 | Plombe |
| 7 | Zählwerk |
| 8 | elektrische Auswertschaltung |
| 9 | Batterie |
| 10 | Einstelleinrichtung für die Leistung des Heizkörpers |
| 11, 12 | Belüftungslöcher |
| 13 | Gehäuse |
| 14 | Fernleitung |
| 15 | Gehäuseoberteil |
| 16 | Mengenerfasser |
| 17 | Warmwasserzapfstelle |
| 18, 19 | Durchgangsöffnung im Gehäuse 15 |
| 20 | Boden des Gehäuses |
| 21 | Zylinder |
| 22 | Deckel des Zylinders 21 |
| 23 | röhrchenförmige Halterung |
| 24 | Flansch der röhrchenförmigen Halterung 23 |
| 25 | Summierer |
| 26 | Analog-Digitalwandler |
| 27 | Mikroprozessor |
| 28 | Meßfühler Raumtemperatur |

**Patentansprüche**

1. Vorrichtung zur elektrischen Verbrauchsermittlung einzelner Wärmeverbraucher bestehend aus einem Gehäuse (1, 2; 15, 32), in dessen dem Wärmeverbraucher zuzuwendenden Gehäuseunterteil (2) eine Temperaturmeßeinrichtung (4) angeordnet ist, deren Leitung zu einer im Gehäuse (1, 2; 15, 32) angeordneten Zähleinrichtung, gegebenenfalls mit von außen ablesbarer Anzeige (7) und einer Batterieversorgung (9), führt, gekennzeichnet durch eine elektronische Auswertschaltung (8), die das von der Temperaturmeßeinrichtung (4) gelieferte Signal als eine Funktion der Temperatur der Oberfläche des Wärmeverbrauchers darstellt, als Zähleinrichtung, wobei die elektronische Auswertschaltung (8) zur integralen Verarbeitung des Meßsignals in eine bleibende Verbrauchsanzeige ausgebildet ist, und dadurch, daß die Temperaturmeßeinrichtung (4) als Thermistor bzw. Widerstandsthermometer ausgebildet ist, daß der elektronischen Auswertschaltung (8) eine Einrichtung (10) angeordnet ist, mit welcher die spezifischen Daten des Wärmeverbrauchers einstellbar sind, daß an dem vom Wärmeverbraucher abzuwendenden Gehäuseoberteil (1) vorzugsweise ein Meßfühler (28) zur Messung der Raumtemperatur angeordnet ist, dessen elektrisches Signal zur Differenzbildung mit dem elektrischen Signal der Temperaturmeßeinrichtung (4) dient, und daß das Gehäuse (1, 2; 15, 32) Belüftungslöcher (11, 12) bzw. Durchgangslöcher (18, 19) zur Luftzirkulation aufweist.

2. Vorrichtung nach Anspruch 1, dadurch gekennzeichnet, daß innerhalb des Gehäuses (15, 32) neben der Temperaturmeßeinrichtung (4) zusätzlich ein Mengenerfasser (16) angeordnet ist, wobei die Temperaturmeßeinrichtung (4) an dem Gehäuseunterteil (2) so angeordnet ist, daß ein direkt die Temperatur des Warmwassers erfaßt, wobei die Mengenerfassung durch Umsetzung des Differenzdrucks nach dem Venturiprinzip erfolgt und durch entsprechende Ausbildung der Venturikanäle über die Vergleichstemperatur im Venturikanal auf die Durchflußmenge geschlossen wird.

3. Vorrichtung nach Anspruch 1 oder 2, dadurch gekennzeichnet, daß die Temperaturmeßeinrichtung (4) auf dem endseitigen, dem Wärmeverbraucher zuzuwendenden Flansch (24) einer röhrchenförmigen Halterung (23) angeordnet ist, die von einer Druckfeder (5) umgeben ist, deren eines Ende sich auf den Flansch (24) abstützt und deren anderes Ende sich gegen den Deckel (22) eines die Druckfeder (5) führenden Zylinders (21) abstützt, der auf dem Boden (20) des Gehäuses fest angeordnet ist.

**Claims**

1. Apparatus for the electrical measurement of the consumption of individual consumers of heat consisting of a housing (1, 2; 15, 32) in whose housing base (2) to be directed to the said consumer is arranged a temperature measurement divice (4) whose connection leads to a counting device being arranged in the housing (1, 2; 15, 32), occasionally with an indicator (7) being readable from outside and with a battery supply (9), characterized by an electronic evaluating circuit (8) bringing forth the signal given by the temperature measurement device (4) as a function of the surface temperature of the said consumer as the said counting device, whereby the electronic evaluating circuit (8) is organized for integrally processing the measurement signal into a lesting consumption reading, and that the temperature measurement device (4) is arranged as a thermistor or a resistance thermometer, that to the electronic evaluating circuit (8) ist a means (10) attached, by which the specific data of the said consumer can be set, that on the upper part (1) of the said housing to be directed from the said consumer away preferably a sensing device (28) is arranged to measure the room temperature, whose electric signal serves for producing the difference with the electric signal of the temperature measurement device (4), and that the housing (1, 2; 15, 32) exhibits ventilation openings (11, 12) or passage openings (18, 19) for circulating air.

2. Apparatus according to claim 1, characterized in that within the housing (15, 32) beside the temperature measurement device (4) is additionally arranged a quantity recorder (16), whereby the temperature measurement device ist arranged at the housing base (2) such as to take up the temperature of the warm water directly, whereby the quantity recording is effected by converting the differential pressure by the Venturi prinziple and by a corresponding shaping of the Venturi channels the flowing quantity is inferred from the reference temperature in the Venturi channel.

3. Apparatus according to claim 1 or 2, characterized in that the temperature measurement device (4) is arranged on the end flange (24) of a tube like mounting (23) being directed to the said consumer, which is surrounded by a commpression spring (5), whose one end leans on the flange (24) and whose other end leans aginst the cover (22) of a cylinder (21) guiding the compression spring (5), which ist firmly arranged on the bottom (20) of the said housing.

**Revendications**

1. Dispositif pour mesurer électriquement la consommation des particuliers consommateurs de chaleur consistant dans un boîtier (1, 2; 15, 32) dans dont la partie inférieure (2) à être tourné vers ledit consommateur une installation à mesurer la température (4) est disposée, dont la communication est branchée à un compteur étant disposé dans le boîtier (1, 2; 15, 32), le cas échéant avec un indicateur (7) pouvant être lu de dehorst et avec un approvisionnement à piles (9), caractérisé par un circuit électronique d'exploitation (8), leq̄uel représente le signal fourni par l'installation à mesurer la température (4) comme une fonction de la température de la surface dudit consommateur, comme compteur, cependant que le circuit électronique d'exploitation (8) est formé à la transformation intégrale du signal mesuré dans une indication durable de la consommation, et par ce que l'installation à mesurer la température (4) est formé comme thermisteur ou thermomètre à résistance, qu'au circuit électronique d'exploitation (8) est adjointe une disposition (10), avec laquelle les données spécifiques dudit consommateur peuvent être fixées, qu'à la partie supérieure du boîtier (1) à être détourner dudit consommateur de préférence un récepteur (28) à mesurer la température ambiente est disposé, dont le signal électrique sert à la formation de la différence avec le signal électrique de l'installation à mesurer la température (4), et que le boîtier (1, 2; 15, 32) fait apparaître des trous à l'aération (11, 12) ou des trous à passage (18, 19) pour la ventilation á l'air.

2. Dispositif selon revendication 1, caractérisé en ce qu'à l'intérieur du boîtier (15, 32) aupres de l'installation à mesurer la température (4) en outre un appareil de mesure de la quantité (16) est disposé, cependant que l'installation à mesurer la température (4) est disposée qa la partie inférieure du boîtier (2) de sorte qu'elle touche la température de l'eu chaude directement, cependant que le mesurement de la quantité s'effectue par la transformation de la pression differentielle selon le principe Venturi et moyennant une formation correspondante des canaux à la Venturi de la température de référence il est inféré à la quantité tranversante.

3. Dispositif selon revendication 1 ou 2, caractérisé en ce que l'installation à mesurer la température (4) est disposée sur le collet terminal (24) à être tourne vers ledit consommateur de chaleur d'un support (23) en forme d'un petit tuyau étant entouré par un ressort à pression (5), dont l'un bout s'appuie sur le collet (24) et l'autre bout s'appuie contre le couvercle (22) d'un cylindre (21) guidant le ressort à pression (5) et étant fixé sur la base du boîtier.

Fig.1  Fig. 2

Fig.3  Fig.4

Fig.5  Fig.6

Fig.7

Fig.8